# EUROPÄISCHE PATENTSCHRIFT

(11) **EP 3 505 707 B1**
(45) Veröffentlichungstag und Bekanntmachung des Hinweises auf die Patenterteilung: **07.06.2023**
(21) Anmeldenummer: 17210725.2
(22) Anmeldetag: 27.12.2017
(51) Int. Cl.: E04G 15/06, F21V 21/04, H02G 3/20

(54) **GERÄTESATZ SOWIE VERFAHREN ZUR AUSBILDUNG EINES FUNKTIONALEN BEREICHS IN EINEM BAUTEIL AUS EINEM GIESSBAREN UND AUSHÄRTBAREN BAUSTOFF**
SET OF DEVICES AND METHOD FOR PRODUCING A FUNCTIONAL AREA IN A COMPONENT COMPRISED OF A POURABLE AND CURABLE BUILDING MATERIAL
APPAREILLAGE AINSI QUE PROCÉDÉ DE FORMATION D'UNE ZONE FONCTIONNELLE DANS UN COMPOSANT D'UN MATÉRIAU DE CONSTRUCTION COULABLE ET DURCISSABLE

(43) Veröffentlichungstag der Anmeldung: 03.07.2019
(73) Patentinhaber: Segmentum Enterprise GmbH, 8620 Wetzikon (CH)
(72) Erfinder: LÜSCHER, Knut, 8400 Winterthur (CH)
(74) Vertreter: Keller Schneider Patent- und Markenanwälte AG

(56) Entgegenhaltungen:
- EP-A2- 0 972 985
- JP-A- H10 211 613
- US-A1- 2001 004 824

## Beschreibung

### Technisches Gebiet

Die Erfindung betrifft einen Gerätesatz sowie ein Verfahren zur Ausbildung eines funktionalen Bereichs, in Form einer Reflektorfläche einer Leuchte, eines Luftdurchlasses, einer Öffnung für eine Sanitärinstallation, eines Auslasses eines Heizsystems und/oder eines Kühlsystems, in einem Bauteil aus einem giessbaren und aushärtbaren Baustoff, insbesondere in einer Betondecke und/oder einer Betonwand.

Das Einbringen von Hohlkörpern in einer Verschalung, welche mit Beton gefüllt wird, so dass diese Hohlkörper einen Hohlraum zur Aufnahme von Leuchten oder Luftdurchlässen begrenzen, ist bekannt.

So beschreibt beispielsweise die EP 2 696 457 ein Verschalungssystem für eine in eine Betonwand zu integrierende Leuchte. Das System umfasst einen Hohlkörper mit einer Öffnung zum Aufnehmen eines Leuchtmittels sowie einen Schalungskörper, der am Hohlkörper derart befestigbar ist, dass er die Öffnung des Hohlkörpers verschliesst und zwecks Montage beispielsweise mit Nägeln an einer Schalungsplatte befestigt werden kann. Der Schalungskörper umfasst einen harten Kern und einen um diesen herum angeordneten weichen Mantel. Der Schalungskörper kann am Hohlkörper lösbar befestigt werden, z.B. durch Gewindestangen oder über einen Bajonettverschluss, und nach dem Giessen der Betonwand entfernt werden, ohne dass die Oberfläche des Betons beschädigt wird oder verputzt werden muss. Das Verschalungssystem kann auch ohne Hohlkörper eingesetzt werden, beispielsweise um eine sacklochartige Ausnehmung im Beton zu erzeugen.

Die WO 96/10714 offenbart eine Vorrichtung zur Herstellung einer integrierten Deckenleuchte in einer Betondecke. Die Vorrichtung besteht aus einem becherförmigen Gehäuseelement, welches während der Herstellung der Betondecke mit einem lösbaren Deckel verschlossen werden kann und über Anschlussöffnungen für Leerrohre verfügt. Zur Montage wird der Deckel, welcher randseitig ein Gewinde aufweist, auf einem Schalungselement befestigt, z.B. durch Nägel oder Schrauben. Sodann wird das becherförmige Gehäuseelement, welches innwendig ebenfalls über ein Schraubgewinde verfügt, auf den Deckel aufgeschraubt. Dadurch wird das Gehäuseelement in definierter Position fixiert und ist gegen ein unerwünschtes Verschieben durch Schläge geschützt. Nach dem Betonieren und nach Entfernung der Schalung kann der Deckel auf dem Gehäuseelement wieder entfernt werden. Sodann kann im Gehäuseelement eine Lichtquelle angeordnet werden.

Ein Gerätesatz mit den Merkmalen des einleitenden Teils des Anspruchs 1 wird in der EP 0 972 985 A2 offenbart.

### Darstellung der Erfindung

Aufgabe der Erfindung ist es, ein dem eingangs genannten technischen Gebiet zugehörenden Gerätesatz sowie Verfahren zu schaffen, welche es ermöglichen, auf eine einfache und raumsparende Art und Weise einen funktionalen Bereich in einem gegossenen Bauelement, wie beispielsweise in einer Wand, einer Decke und/oder einem Bodenbereich aus einem giessbaren und aushärtbaren Baustoff, zu schaffen. Im Besonderen soll es ermöglicht werden, in zuverlässiger und möglichst effizienter Art und Weise eine Reflektorfläche einer Leuchte und/oder einen Luftdurchlass in einem solchen Bauelement herzustellen.

Die Lösung der Aufgabe ist durch die Merkmale des Anspruchs 1 definiert. Gemäss der Erfindung umfasst der Gerätesatz zur Ausbildung eines funktionalen Bereichs in einem Bauteil aus einem giessbaren und aushärtbaren Baustoff eine Montagehilfe, welche auf einer Gussform oder einer Schalung für den giessbaren und aushärtbaren Baustoff lösbar befestigbar ist. Ferner weist der Gerätesatz eine Schalungseinlage auf, welche an einer Aussenseite, die dem giessbaren und aushärtbaren Baustoff zugewandt ist, eine im Wesentlichen zur Form der zu erzeugenden Reflektorfläche komplementäre Form aufweist. Der Gerätesatz verfügt weiter über einen Einbaukörper, welcher lösbar an der Montagehilfe angebracht werden kann und zum Einbau im Bauteil aus dem giessbaren und aushärtbaren Baustoff vorgesehen ist, sowie über eine Anpressvorrichtung, welche ein Andrücken der Schalungseinlage gegen die Gussform oder die Schalung ermöglicht, wenn die Schalungseinlage auf der Gussform oder der Schalung aufgelegt ist.

Die Aufgabe wird ferner durch ein Verfahren mit den Merkmalen des unabhängigen Anspruchs 8 gelöst. Das erfindungsgemässe Verfahren zur Ausbildung eines funktionalen Bereichs in einem Bauteil aus einem giessbaren und aushärtbaren Baustoff mit einem erfindungsgemäßen Gerätesatz umfasst die folgenden Schritte:
a) Befestigen der Montagehilfe in einer Gussform oder an einer Schalung für den giessbaren und aushärtbaren Baustoff;
b) Auflegen der Schalungseinlage, welche an einer Aussenseite, die dem giessbaren und aushärtbaren Baustoff zugewandt wird, eine im Wesentlichen zur Form des zu erzeugenden funktionalen Bereichs komplementäre Form aufweist, in die Gussform oder Schalung;
c) Anbringen des Einbaukörpers an der Montagehilfe, insbesondere so dass der Einbaukörper an der Aussenseite der Schalungseinlage anliegt;
d) Andrücken der Schalungseinlage gegen die Gussform oder Schalung mittels der Anpressvorrichtung;
e) Giessen des Bauteils, wobei der Einbaukörper zumindest teilweise, vorzugsweise jedoch vollständig eingegossen wird;
f) Aushärten des Baustoffs und Entfernen mindestens der Montagehilfe und der Schalungseinlage vom Bauteil.

Der erfindungsgemässe Gerätesatz lässt sich einfach in einer Gussform oder auf einer Schalung montieren. Durch das Andrücken der Schalungseinlage auf die Gussform oder auf die Schalung wird zuverlässig verhindert, dass der giessbare und aushärtbare Baustoff unter die Schalungseinlage fliesst. Dadurch muss nach dem Aushärten des Baustoffs kein unerwünschtes Material aus dem funktionalen Bereich entfernt werden, beispielsweise durch Fräsen.

Zudem ist es mit dem erfindungsgemässen Gerätesatz möglich, in armierten Bauteilen, z.B. in armiertem Beton, funktionale Bereiche zu erzeugen, ohne standardgemässe Armierungen zu verlegen oder anzupassen. Entsprechend entfallen auch aufwändige Verstärkungsmassnahmen im Zusammenhang mit angepassten Armierungen.

Als "Baustoff" wird in der folgenden Anmeldung ein Werkstoff verstanden, mit welchem Bauwerke und Gebäude errichtet werden können.

Als fliessbarer und aushärtbarer Baustoff wird ein Baustoff verstanden, der in einem fliessbaren Zustand verarbeitet, insbesondere geformt wird, wobei anschliessend der Baustoff während einer gewissen Zeit ausgehärtet wird, um ein fertiges Bauteil zu erhalten.

Vorzugsweise wird der Baustoff zum Formen in eine Gussform oder in eine Schalung gegossen. "Schalung" bezeichnet in diesem Zusammenhang eine Gussform für hydraulische Bindemittelzusammensetzungen, wie insbesondere Beton, Gips und/oder Mörtel. Als "Gussform" wird eine Hohlform verstanden, welche einen durch Wandungen begrenzten Innenraum aufweist, der eine spezifische Form und Grösse aufweist, die zur Form des herzustellenden Bauteils komplementär ist. Innerhalb der Gussform oder Schalung können Verstärkungselemente, beispielsweise in der Form von Armierungen vorhanden sein, um die Festigkeit des Bauteils zu erhöhen. Die Armierungen sind dabei vorzugsweise als Armierungseisen ausgestaltet. Eine Schalung wird üblicherweise durch Holzbretter gebildet, wobei die innere Oberfläche der Schalung, also diejenige Oberfläche, die mit dem Beton in Berührung kommt, als "Schalhaut" bezeichnet wird.

Als "Bauteil" wird ein dreidimensionales Element mit einer bestimmten Form verstanden, welches einen Bestandteil eines Gebäudes oder Bauwerkes darstellt. Insbesondere kann das Bauteil eine Wand oder ein Wandelement, eine Decke oder ein Deckenelement oder eine Mauer sein. Als Wandelement oder Deckenelement werden Teile eine Wand oder Decke verstanden, welche vorgefertigt und anschliessend während des Baus eines Gebäudes oder eine Bauwerks eingesetzt werden. Vorzugsweise werden Wände, Decken und Mauern jedoch vor Ort hergestellt, beispielsweise mit Ortbeton.

Unter dem Begriff "Einbaukörper" wird ein Körper verstanden, welcher zum Einbau im Bauteil aus dem giessbaren und aushärtbaren Baustoff vorgesehen ist. Der Einbaukörper ist zudem so ausgebildet, dass er lösbar mit der Montagehilfe verbunden werden kann. Hierfür können am Einbaukörper entsprechende Verbindungsmittel vorliegen. Unter "lösbar verbunden" bzw. einer "lösbaren Verbindung" wird im Rahmen der vorliegenden Erfindung insbesondere eine Verbindung verstanden, welche im Wesentlichen ohne Zerstörung der Verbindungsmittel gelöst werden können. Insbesondere handelt es sich um eine nicht-stoffschlüssige Verbindung wie beispielsweise kraftschlüssige Verbindungen und/oder formschlüssige Verbindungen.

Ein "funktionaler Bereich" ist im Besonderen ein Bereich im Bauteil, welcher es ermöglicht, im Bauteil eine definierte Funktion zu realisieren. Die definierte Funktion ist insbesondere eine Infrastrukturfunktion, im Speziellen eine Gebäudeinfrastrukturfunktion.

Bei der definierten Funktion handelt es sich um eine Lüftungs-, Heizungs-, Kühl-, Sanitär-und/oder Beleuchtungsfunktion.

Der funktionale Bereich kann grundsätzlich auch mehrere Funktionen gleichzeitig erfüllen.

Der "funktionale Bereich" ist eine Reflektorfläche einer Leuchte, ein Luftdurchlass, eine Öffnung für eine Sanitärinstallation, ein Auslass eines Heizsystems und/oder eines Kühlsystems. Besonders bevorzugt handelt es sich um eine Reflektorfläche einer Leuchte und/oder einen Lüftungsdurchlass. Im Besonderen ist der funktionale Bereich eine Reflektorfläche einer Leuchte.

Als "Reflektorfläche" wird eine Fläche auf einer Aussenseite eines Bauteils verstanden, welche das Licht einer Leuchte, welche beispielsweise unter dieser Fläche angeordnet ist, reflektiert. Die Reflektorfläche kann dabei derart geformt sein, dass das Licht der Leuchte gestreut oder auf einen bestimmten Punkt ausserhalb des Bauteils gebündelt wird, je nach beabsichtigtem Verwendungszweck.

Insbesondere falls die funktionale Fläche eine Reflektorfläche ist, wird die funktionale Fläche nach Erstellen des Bauteils vorzugsweise mit einer Farbe bemalt, mit einem Material beschichtet und/oder mit dem Reflektorelement bestückt, welches einen grossen Anteil des von der Leuchte auf die Reflektorfläche auftretende Licht reflektiert und/oder streut, je nach Anwendungszweck. Eine Bemalung kann aber auch bei anderen funktionalen Flächen, welche keine Reflektorflächen sind, vorteilhaft sein.

Im Rahmen der vorliegenden Anmeldung wird als "Leuchte" ein Element verstanden, welches über mindestens ein Leuchtmittel verfügt. In der einfachsten Ausführungsform ist die Leuchte nur durch das Leuchtmittel ausgebildet. Vorzugsweise umfasst jedoch die Leuchte eine Leuchtmittelfassung sowie weitere dekorative und/oder funktionale Elemente, wie zum Beispiel eine Abdeckung, ein Gehäuse, einen Spiegel, etc.

Als Leuchtmittel werden vorzugsweise Glühlampen, Halogenlampen, Gasentladungslampen und/oder Leuchtdioden eingesetzt. Hierzu verfügt die Leuchte vorzugsweise über mindestens eine Leuchtmittelfassung, in welche mindestens ein Leuchtmittel lösbar eingesetzt werden kann, z.B. ein Sockel des E27 oder E14 Typs. Dabei kann es sich um ein Leuchtmittel handeln, welches mit 110 V oder 220 - 240 V Wechselspannung betrieben wird. Alternativ bevorzugt kann das mindestens eine Leuchtmittel jedoch auch mit 12 V oder 24 V Gleich- oder Wechselspannung betrieben werden, je nach Anwendungsbereich.

Gemäss einer bevorzugten Ausführungsform verfügt der Einbaukörper über Befestigungsmittel für ein Infrastrukturelement, insbesondere ein Befestigungselement für ein Leuchtmittel, eine Leuchtmittelfassung, eine Sichtblende, einen Lufteinlass, einen Luftauslass, eine Lüftungsabdeckung, ein Lüftungsgitter, ein Lochgitter, ein Luftleitelement, ein Luftleitblech und/oder einen Strömungsrichter. Besonders bevorzugt handelt es sich um ein Befestigungselement für ein Leuchtmittel und/oder eine Leuchtmittelfassung. Das Befestigungselement umfasst beispielsweise ein Schraubgewinde, einen Bajonettverschluss und/oder ein Verrastelement.

Das Leuchtmittel wird vorzugsweise direkt mit den Befestigungsmitteln des Einbaukörpers verbunden. Alternativ wird zunächst eine Leuchtmittelfassung mit dem Einbaukörper verbunden. Anschliessend wird ein Leuchtmittel mit der Leuchtmittelfassung verbunden. Die Leuchtmittelfassung kann dabei die oben erwähnten weiteren Elemente aufweisen.

Ein "Luftdurchlass" kann ein Zuluftauslass und/oder ein Abluftauslass sein, welcher insbesondere mit einem Luftleitungsnetz einer raumlufttechnischen Anlage verbunden ist. Der Luftdurchlass ermöglicht es somit Frischluft zuzuführen und/oder Abluft abzuführen.

Der giessbare und aushärtbare Baustoff ist vorzugsweise Beton, wobei das Bauteil vorzugsweise eine Betonwand oder Betondecke ist. Alternativ kann der giessbare und aushärtbare Baustoff jedoch auch eine Gipsmasse, ein Harz und/oder ein Polymer, etc. sein, je nach Anwendungszweck des Bauteils.

Die Montagehilfe wird vorzugsweise durch Befestigungselemente auf der Gussform oder Schalung lösbar befestigt. Die Befestigungsmittel sind vorzugsweise Nägel, Schrauben oder Bolzen. Alternativ kann die Montagehilfe jedoch auch auf der Gussform oder Schalung geklebt werden, insbesondere mit einem Klebstoff, der nach Herstellung des Bauteils ein zerstörungsfreies Ablösen der Montagehilfe von der Gussform oder Schalung ermöglicht. Die Montagehilfe kann bevorzugt aus einem Metall, insbesondere Stahl, einem Kunststoff, einem polymeren Material, Holz, einem Verbundwerkstoff und/oder einem Kompositmaterial gefertigt. Gemäss einer besonders bevorzugten Ausführungsform umfasst oder besteht die Montagehilfe aus einem Kunststoff, insbesondere einem polymeren Material.

Die Schalungseinlage ist vorzugsweise aus einem Metall, insbesondere nichtrostendem Stahl, einem Kunststoff, einem polymeren Material, einem Kompositmaterial, einem Verbundwerkstoff und/oder Holz gefertigt. Wichtig ist, dass das Material der Schalungseinlage zerstörungsfrei, schnell, einfach und rückstandsfrei vom ausgehärteten Bauteil entfernt werden kann. Die Schalungseinlage sollte demnach keinen guten Haftgrund für den giessbaren und aushärtbaren Baustoff darstellen. Alternativ kann die Aussenseite der Schalungseinlage mit einem Material beschichtet oder überzogen sein, welches ein Anhaften des giessbaren und aushärtbaren Baustoffs verhindert, beispielsweise mit einem Trennmittel, einem Schalungsöl, Schalungswachs oder dergleichen.

Während die Aussenseite der Schalungseinlage zur Form des zu erzeugenden funktionalen Bereichs komplementär ist, kann eine Innenseite der Schalungseinlage, das heisst diejenige Seite, die der Gussform oder Schalung zugewandt ist, eine beliebige Form aufweisen, solange die Schalungseinlage insgesamt als gewölbte Scheibe ausgeführt ist, deren Außenseite konvex gewölbt ist Durch Andrücken der Schalungseinlage auf die Gussform oder die Schalung entsteht zwischen Schalungseinlage und Gussform oder Schalung ein Raum, welcher beim anschliessenden Giessen des Baustoffs durch diesen nicht ausgefüllt wird. Dadurch entsteht nach dem Entfernen der Schalungseinlage vom Bauteil der funktionale Bereich, beispielsweise eine Reflektorfläche.

Vorzugsweise verfügt die Schalungseinlage an einer äusseren Kante, welche beim bestimmungsgemässen Gebrauch der Schalungseinlage auf der Gussform oder der Schalung aufliegt, über Dichtelemente, insbesondere über Dichtringe oder Dichtlippen, welche den durch die Schalungseinlage bedeckten Bereich der Gussform oder der Schalung abdichtet, so dass eine zusätzliche Dichtwirkung erzielt wird, die verhindert, dass der giessbare und aushärtbare Baustoff in diesen Bereich fliessen kann.

Eine Innenseite der Schalungseinlage und/oder ein konkaves Volumen der Schalungseinlage verfügt im Besonderen über Verstärkungselemente und/oder Anschlagselemente. Dabei kann es sich beispielsweise um eine oder mehrere Rippen, Stege, Winkel und/oder Vorstände handeln. Im Besonderen handelt es sich um radial verlaufende Rippen und/oder umlaufende, z.B. ringförmige, Rippen. Solche Elemente können zugleich als Verstärkungselemente und/oder Anschlagselemente wirken. Die Verstärkungselemente und/oder Anschlagselemente sind bevorzugt so ausgebildet, dass die Schalungseinlage weiterhin mit ihrer äusseren Kante auf der Schalung oder der Gussform aufliegen kann.

Durch die Verstärkungselemente kann die Stabilität der Schalungseinlage erhöht werden. Mit einem Anschlagselement kann zudem ein unerwünschtes Durchbiegen der Schalungseinlage verhindert werden, wenn die Schalungseinlage gegen die Gussform oder Schalung gedrückt wird. Hierfür sind die Anschlagselemente bevorzugt so ausgebildet, dass sie bis zu einer durch die äussere Kante der Schalungseinlage gebildeten Ebene reichen, diese aber nicht durchstossen.

Der Einbaukörper wird vorzugsweise an der Aussenseite der Schalungseinlage angeordnet, das heisst, dass der Einbaukörper innerhalb des Bauteils verbleibt, also beim Eingiessen des Baustoffs von diesem umflossen wird. Vorzugsweise verfügt der Einbaukörper über ein Anschlusselement an ein Infrastruktursystem, insbesondere ein Gebäudeinfrastruktursystem. Beispielsweise verfügt der Einbaukörper über ein Anschlusselement für eine elektrische Leitung, für ein Montagerohr, in welches elektrische Leitungen gezogen werden können, und/oder für den Anschluss an ein Heizungs-, Kühl-und/oder Belüftungssystem. Vorzugsweise werden die Infrastruktursysteme vor dem Giessen des Baustoffs an den Einbaukörper angeschlossen und/oder mit diesem verbunden.

Die Anpressvorrichtung ist vorzugsweise als Teil der Montagehilfe und/oder als Teil des Einbaukörpers ausgestaltet. Zusätzlich oder alternativ kann die Anpressvorrichtung jedoch auch als separates Teil ausgestaltet sein.

Vorzugsweise ist die Anpressvorrichtung derart ausgebildet, dass diese eine Relativbewegung zwischen Befestigungsvorrichtung und Montagehilfe ermöglicht, wobei eine Anschlagsfläche des Einbaukörpers auf die Schalungseinlage einwirkt, so dass diese gegen die Gussform oder Schalung angedrückt werden kann, wenn die Schalungseinlage auf der Gussform oder Schalung aufliegt.

Gemäss einer vorteilhaften Ausführungsform besteht der Einbaukörper im Wesentlichen aus einem Metall, insbesondere einem nichtrostendem Stahl, und/oder aus einem aushärtbaren und giessbaren Material, während die Schalungseinlage und die Montagehilfe bevorzugt im Wesentlichen aus einem Kunststoff, einem polymeren Material, einem Kompositmaterial und/oder einem Verbundwerkstoff bestehen.

Die Anpressvorrichtung verfügt vorzugsweise über ein Fixierungselement, mit welchem die Schalungseinlage in einer Endlage relativ zur Montagehilfe gehalten werden kann. Die Anpressvorrichtung kann beispielsweise über Kabelbinder, einen Zurrgurt, einen Bajonettverschluss, eine Schraubverbindung und/oder eine Schnappverbindung verfügen, welche sowohl die relative Bewegung zwischen Montagehilfe und Einbaukörper sowie deren Fixierung in einer definierten Position zueinander ermöglicht.

Vorzugsweise verfügt die Anpressvorrichtung oder die Montagehilfe über ein Führungselement, welche eine Bewegung der Schalungseinlage relativ zur Montagehilfe nur entlang einer linearen Achse einschränkt. Das Führungselement kann beispielsweise als Stift, Bolzen oder Stutzen ausgeführt sein. Das Führungselement ist vorzugsweise mit der Montagehilfe fest verbunden und/oder mit dieser einstückig ausgeführt. Alternativ kann das Führungselement jedoch auch lösbar mit der Montagehilfe und/oder mit der Anpressvorrichtung verbindbar sein. Entsprechend verfügt die Befestigungsvorrichtung über eine Nut oder Öffnung, welche mit dem Führungselement zusammenwirkt.

Vorzugsweise wird die Schalungseinlage zwischen der Montagehilfe und dem Einbaukörper angeordnet. Durch die Bewegung des Einbaukörpers relativ zur Montagehilfe wirkt über die Anschlagsfläche eine Kraft auf die Schalungseinlage ein, welche diese auf die Gussform oder die Schalung andrückt.

Vorzugsweise beinhaltet oder ist die Anpressvorrichtung mindestens eine Schraubverbindung, mit welcher der Einbaukörper lösbar mit der Montagehilfe befestigbar und relativ zu dieser linear bewegbar ist.

Dies ermöglicht eine möglichst einfache Ausgestaltung der Anpressvorrichtung. Zudem kann durch eine einfache Schraubverbindung einerseits die lösbare Verbindung zwischen Montagehilfe und Einbaukörper wie auch die Anpressvorrichtung realisiert werden.

Vorzugsweise umfasst die Schraubverdingung eine Gewindestange und/oder einen Stutzen mit Aussengewinde, welche oder welcher zumindest in eine mit einem Innengewinde ausgestattete Öffnung oder Hülse der Montagehilfe und/oder des Einbaukörpers eingeschraubt werden kann. Besonders bevorzugt verfügt die Montagehilfe über eine abstehende Gewindestange oder über einen abstehenden Stutzen mit einem Aussengewinde, welche oder welcher in eine Öffnung oder Hülse mit Innengewinde des Einbaukörpers eingeschraubt werden kann. Alternativ kann auch eine lose Gewindestange als Anpressvorrichtung verwendet werden, welche entsprechend je in eine Öffnung oder Hülse der Montagehilfe sowie des Einbaukörpers eingeschraubt wird.

Die Schraubverbindung dient zugleich als Führungselement, welches die Bewegung der des Einbaukörpers relativ zur Montagehilfe auf eine lineare Achse beschränkt. Ferner kann durch die Schraubverbindung die Schalungseinlage in einer Endlage relativ zur Montagehilfe gehalten werden, womit die Schraubverbindung zugleich die Funktion eines Fixierungselements innehat.

Die Montagehilfe verfügt vorzugsweise über eine Basis, mit welcher die Montagehilfe lösbar mit der Gussform oder Schalung befestigt werden kann, sowie über einen von der Basis abstehenden Stutzen, mit welchem die Montagehilfe lösbar mit dem Einbaukörper befestigt werden kann, wobei der Stutzen vorzugsweise über ein Aussengewinde verfügt. Die Basis kann in jeder geeigneten Form vorliegen. Bevorzugt ist die Basis jedoch als Platte, insbesondere als Viereckige Platte ausgestaltet.

Die Befestigung der Montagehilfe auf der Gussform oder der Schalung erfolgt vorzugsweise mit den bereits weiter oben erwähnten Befestigungsmitteln oder Klebstoff. Hierzu verfügt die Basis vorzugsweise über entsprechende Löcher zur Aufnahme der Befestigungsmittel oder über eine ebene Fläche, die als Haftgrund für den Klebstoff dient. Alternativ kann die Basis auch über eine Klebefolie verfügen, mit welcher sich die Montagehilfe einfach und schnell auf der Gussform oder der Schalung befestigen lässt.

Der Stutzen ist vorzugsweise fix mit der Basis der Montagehilfe verbunden, beispielsweise durch Löten, Schweissen oder Kleben. Alternativ kann der Stutzen jedoch auch lösbar mit der Basis verbunden sein, beispielsweise durch mindestens ein Befestigungselement. Weiter bevorzugt können Basis und Stutzen jedoch auch einstückig ausgebildet sein. Ein Fachmann erkennt, dass der Stutzen mit Aussengewinde zugleich als Anpressvorrichtung dient.

Vorzugsweise verfügt die Schalungseinlage über eine Öffnung, durch welche der Stutzen der Montagehilfe durchführbar ist, wobei der Stutzen vorzugsweise über einen Anschlag verfügt, mit welchem ein Abstand eines nicht auf der Gussform oder der Schalung stehenden Bereichs der Schalungseinlage relativ zur Gussform oder Schalung begrenzt werden kann.

Die Schalungseinlage verfügt vorzugsweise auch dann über eine Öffnung, wenn als Anpressvorrichtung eine Gewindestange eingesetzt wird, so dass auch die Gewindestange durch die Öffnung durchgeführt werden kann.

Die Öffnung weist vorzugsweise einen Durchmesser auf, der grösser ist als der Durchmesser des Stutzens oder der Gewindestange. Vorzugsweise ist der Durchmesser der Öffnung um 0.1 % bis 7.0%, weiter bevorzugt um 0.5 % bis 5.0 %, im Speziellen um 2 % bis 4% grösser als der Durchmesser des Stutzens oder der Gewindestange.

Der Durchmesser der Öffnung misst beispielsweise von 5 mm bis 100 mm, weiter bevorzugt von 10 mm bis 75 mm, im Speziellen von 25 mm bis 40 mm.

Durch den Anschlag wird sichergestellt, dass mindestens ein Teil der Schalungseinlage einen definierten Abstand zur Gussform oder Schalung einhält. Dadurch wird verhindert, dass die Schalungseinlage durch die Bewegung des Einbaukörpers relativ zur Montagehilfe zu fest auf beziehungsweise zu weit in Richtung der Gussform oder Schalung gedrückt wird, wobei die Schalungseinlage deformiert werden könnte.

Der Anschlag weist vorzugsweise einen Durchmesser auf, der grösser ist als der Durchmesser der Öffnung. Alternativ ist mindestens eine Abmessung des Anschlags in einer Ebene, welche coplanar zur Ebene der Öffnung steht, grösser als die Öffnung.

Der Anschlag liegt vorzugsweise in der Form einer Mutter vor, welche auf das Aussengewinde des Stutzens aufgeschraubt werden kann. Durch die Ausgestaltung als Mutter lässt sich der Abstand des nicht auf der Gussform oder der Schalung stehenden Bereichs der Schalungseinlage relativ zur Gussform oder Schalung variieren. Dadurch kann die Montagehilfe für unterschiedlich geformte Schalungseinlagen verwendet werden.

Alternativ kann als Anschlag jedoch auch mindestens ein Vorsprung, wenigstens eine Rippe oder ähnlich, die vom Stutzen absteht, als Anschlag vorgesehen sein.

In einer weiteren vorteilhaften Ausführungsform wird eine wie vorstehend beschriebene Montagehilfe umfassend einen Anschlag mit einer Schalungseinlage mit Verstärkungselementen und/oder Anschlagselementen, wie sie vorstehend beschrieben sind, kombiniert.

Die Schalungseinlage ist als gewölbte Scheibe ausgeführt, deren Aussenseite konvex gewölbt ist. Die Scheibe ist im Besonderen kreisrund.

Dadurch lässt sich im Bauteil ein konkav gewölbter funktionaler Bereich, insbesondere eine konkav gewölbte Reflektorfläche, ausbilden. Je nach Anwendungszweck kann die Scheibe unterschiedliche Durchmesser sowie Krümmungsradien aufweisen.

Die Schalungseinlage verfügt vorzugsweise über eine konkave Innenfläche. Die Innenfläche ist diejenige Fläche, welche bei der Verwendung der Schalungseinlage der Gussform oder Schalung zugewandt ist.

Die gewölbte Scheibe verfügt vorzugsweise im Bereich ihres Scheitelpunktes über einen ebenen Zentralbereich, insbesondere auf der Aussenseite. Dadurch kann eine Anschlagsfläche des Einbaukörpers besonders effizient eine Kraft auf die Schalungseinlage ausüben, sofern die lösbare Verbindung zwischen dem Einbaukörper und der Montagehilfe durch die Anpressvorrichtung erfolgt.

Vorzugsweise umfasst eine äussere Kante der gewölbten Scheibe eine Fase. Durch die Fase kann die Dichtung der gewölbten Scheibe gegenüber der Gussform oder Schalung verbessert werden.

Die gewölbte Scheibe weist vorzugsweise überall im Wesentlichen dieselbe Materialstärke auf. Der Durchmesser der gewölbten Scheibe beträgt vorzugsweise von 5 cm bis 250 cm, insbesondere bevorzugt von 10 cm bis 150 cm, ganz besonders bevorzugt von 20 cm bis 75 cm, im Speziellen von 40 cm bis 60 cm.

Die Höhe der gewölbten Scheibe, das heisst die Distanz von einer Ebene, die durch die äusseren Kante aufgespannt wird, bis zum Scheitelpunkt beträgt vorzugsweise von 0.5 cm bis 10.0 cm, insbesondere von 1 cm bis 7 cm, besonders bevorzugt von 2 cm bis 5 cm, im Speziellen von 3 cm bis 4 cm.

Vorzugsweise verfügt die gewölbte Scheibe im Bereich des Scheitelpunkts über eine Öffnung, durch welche der Stutzen der Montagehilfe durchgeführt werden kann.

Alternativ kann die Schalungseinlage je nach Anwendungszweck jedoch auch andere Dimensionen aufweisen.

Die Schalungseinlage kann optional auch an einer äusseren Oberfläche strukturiert sein, so dass im funktionalen Bereich gezielt Strukturen erzeugt werden können.

Auch möglich ist es, dass die Schalungseinlage mit einem oder mehreren Funktionselementen belegt ist, welche beim Giessen in das Bauteil miteingegossen werden. Bei den Funktionselementen kann es sich beispielsweise um reflektierende Elemente, Spiegel, Leuchtmittel, Leuchten, elektrische Leitungen, Fluidleitungen und/oder Befestigungsmittel handeln. Die Befestigungsmittel können z.B. Hülsen mit Innengewinde, Clips, Haken und/oder Ösen sein. An den Befestigungsmitteln können nach der Herstellung des Gussteils gegebenenfalls Einsatzelemente, wie unten beschrieben, und/oder beliebige andere Teile befestigt werden.

Die Funktionselemente können zur Befestigung beispielsweise an der Schalungseinlage verklebt werden und zwar mit Vorteil so, dass sie sich beim Entfernen der Schalungseinlage leicht von dieser ablösen lassen.

Der erfindungsgemässe Gerätesatz verfügt vorzugsweise über mehrere Schalungseinlagen mit unterschiedlichen Radien und Formen. Dadurch können mit dem Gerätesatz unterschiedliche funktionale Bereiche, im Besonderen Reflektorflächen, ausgebildet werden.

Vorzugsweise verfügt der Gerätesatz über eine Mehrzahl an Einbaul<örpern, so dass mit einem Gerätesatz mehrere Bauteile mit ausgebildeten funktionalen Bereichen hergestellt werden können.

Der Einbaukörper umfasst ein beidseitig offenes Rohrstück oder eine beidseitig offene Hülse.

Ein erstes Ende des beidseitig offenen Rohrstücks oder der beidseitig offenen Hülse kann lösbar mit der Montagehilfe verbunden werden, wobei vorzugsweise die Schalungseinlage zwischen dem ersten Ende und der Montagehilfe angeordnet wird. Diese Verbindung erfolgt vorzugsweise durch die Anpressvorrichtung, das heisst, dass die Anpressvorrichtung in diesem Fall vorzugsweise als Teil der Montagehilfe oder der das Rohrstück oder die Hülse umfassenden Einbaukörper realisiert ist. Dadurch kann das erste Ende des Rohrstücks oder der Hülse als Anschlagsfläche dienen, welche auf die Schalungseinlage einwirkt, um diese gegen die Gussform oder Schalung anzudrücken.

Das Rohrstück oder die Hülse weist insbesondere bevorzugt zumindest im Bereich des ersten Endes ein Innengewinde auf. Durch dieses Innengewinde lässt sich vorzugsweise der Einbaukörper bzw. die Befestigungsvorrichtung mit der Gewindestange oder dem Stutzen mit Aussengewinde der Anpressvorrichtung, welche - wie bereits oben erwähnt - bei dieser Ausgestaltung vorzugsweise als Teil des Einbaukörpers oder der Montagehilfe ausgestaltet ist, verbinden. Insbesondere bei Leuchten ist dieses Innengewinde vorzugsweise derart ausgestaltet, dass dieses gleichzeitig auch als Befestigungsmittel für das Leuchtmittel oder für die Leuchtmittelfassung dient. Das heisst, dass der Durchmesser und die Gewindeparameter, wie z.B. die Gewindesteigung, derart gewählt werden, dass sowohl die Gewindestange oder der Stutzen mit Aussengewinde als auch das Leuchtmittel oder die Leuchtmittelfassung in das Rohrstück oder die Hülse eingeschraubt werden können. Dementsprechend ist natürlich auch der Durchmesser der Gewindestange oder des Stutzens mit Aussengewinde sowie dessen Gewindeparameter passend ausgestaltet.

Vorzugsweise ist das beidseitig offene Rohrstück beziehungsweise die beidseitig offene Hülse über dessen gesamte Länge mit einem Innengewinde versehen. Dadurch lässt sich das Rohrstück beziehungsweise die Hülse in zwei Ausrichtungen verwenden. Das heisst, dass entweder das erste Ende oder ein zweites Ende, welches dem ersten Ende gegenüberliegt, mit der Montagehilfe lösbar verbunden werden kann.

Das Vorsehen eines beidseitig offenen Rohrstücks oder einer beidseitig offenen Hülse als Teil des Einbaukörpers ermöglicht beispielsweise auch das Durchführen eines Elektrokabels durch die Befestigungsvorrichtung und/oder die Durchführung von Luft.

Der Aussendurchmesser des beidseitig offenen Rohrstücks beziehungsweise der beidseitig offenen Hülse ist vorzugsweise grösser als der Durchmesser der Öffnung der Schalungseinlage.

Der Innendurchmesser des beidseitigen Rohrstücks oder der beidseitig offenen Hülse beträgt vorzugsweise von 1 cm bis 10 cm, besonders bevorzugt von 2 cm bis 7 cm, im Speziellen von 3 cm bis 4 cm. Besonders bevorzugte Innendurchmesser betragen dabei 3 cm und 3.175 cm (1 ¼ Zoll).

Der Einbaukörper wird vorzugsweise derart angeordnet, dass eine Längsachse der beidseitig offenen Hülse oder des beidseitig offenen Rohrstücks nach Fertigstellung des Bauteils oder bei dessen bestimmungsgemässen Einsatz lotrecht steht. Alternativ kann der Einbaukörper jedoch auch derart angeordnet werden, dass die Längsachse in einem bestimmten Winkel zur Lotrichtung steht, beispielsweise in einem Winkel von ca. 90°.

Vorzugsweise besteht der Einbaukörper aus der beidseitig offene Hülse oder dem beidseitig offenen Rohrstück. Der Einbaukörper kann nebst dem beidseitig offenen Rohrstück oder der beidseitig offenen Hülse jedoch auch über weitere Elemente verfügen, beispielsweise über ein Gehäuse für eine Elektroinstallation, wie z.B. einen Transformator, eine Befestigungsplatte, einen Luftfilter, Fluidleitelemente, Abdeckelemente oder ähnlich.

In einer weiteren bevorzugten Ausführungsform besteht der Einbaukörper in Bezug auf das Gesamtgewicht des Einbaukörpers zu wenigstens 50 Gew.-%, bevorzugt wenigstens 75 Gew.-%, im Speziellen wenigstens 95 Gew.-%, noch bevorzugter im Wesentlichen vollständig oder zu 100 Gew.-% aus einem aushärtbaren und giessbaren Material, insbesondere aus einem Gips, Mörtel oder Beton. Bevorzugt handelt es sich um das gleiche aushärtbare und giessbare Material wie jedes des Bauteils, in welches der Einbaukörper eingegossen wird. Damit lässt sich das Bauteil später einfacher recyceln.

Ebenfalls vorteilhaft ist ein Einbaukörper, welcher im Wesentlichen aus Metall, einem nichtrostendem Stahl, einem Kunststoff, einem polymeren Material, einem I<ompositmaterial und/oder einem Verbundwerkstoff bestehen. Im Besonderen Einbaukörper aus nichtrostendem Stahl sind besonders stabil, dauerhaft und können bei Bedarf in vielfältiger Weise nachbearbeitet werden.

Vorzugsweise verfügt der Einbaukörper über mindestens ein Verankerungselement, mit welchem der Einbaukörper im giessbaren und aushärtbaren Baustoff verankert werden kann.

Durch das Verankerungselement kann der Einbaukörper zusätzlich vor einem Ausreissen aus dem fertigen Bauteil gesichert werden. Ferner ermöglicht das mindestens eine Verankerungselement, dass der Einbaukörper im Bauteil drehsicher verankert ist.

Das mindestens eine Verankerungselement steht vorzugsweise von einer Aussenfläche des Einbaukörpers ab, insbesondere in einer Raumrichtung, welche im rechten Winkel zu einer Längsachse der Befestigungsvorrichtung steht. Vorzugsweise handelt es sich beim mindestens einen Verankerungselement um einen Stab oder Vorsprung. Alternativ kann das mindestens eine Verankerungselement auch in der Form von Rippen oder Noppen vorliegen, die von einer Aussenfläche des Einbaukörpers abstehen.

Der Gerätesatz verfügt zudem über ein Einsatzelement, welches wenigstens bereichsweise, insbesondere im Wesentlichen vollständig, eine zur Schalungseinlage und/oder zum zu erzeugenden funktionalen Bereich komplementäre Form hat und wobei das Einsatzelement bevorzugt so ausgebildet ist, dass es mit dem Einbaukörper verbunden werden kann. Es ist aber grundsätzlich auch möglich, dass das Einsatzelement zusätzlich oder ausschliesslich im erzeugten funktionalen Bereich befestigt wird.

Im Besonderen ist eine äussere Begrenzungsform des Einsatzelements geometrisch ähnlich zu einer durch die äussere Kante der Schalungseinlage gebildeten Form, jedoch im Besonderen gleich gross oder kleiner als diese.

Das Einsatzelement weist im Besonderen im Wesentlichen denselben Aussendurchmesser, dieselbe Form und/oder dieselbe Grösse wie die Schalungseinlage auf. Das Einsatzelement hat die Form einer gewölbten Scheibe.

Das Einsatzelement ist ein Reflektorelement aus einem Metall, Holz und/oder einem polymeren Werkstoff. Dieses verfügt bevorzugt im Wesentlichen über dieselbe Form und Grösse wie die Schalungseinlage und kann in die Reflektorfläche eingelegt sowie bevorzugt mit dem Einbaukörper verbunden werden kann.

Das Einsatzelement, insbesondere das Reflektorelement, wird vorzugsweise nach dem Aushärten des Bauteils in die Reflektorfläche eingelegt und gegebenenfalls mit dem Einbaukörper verbunden.

Durch ein Reflektorelement kann eine durch den Gerätesatz in einem Bauteil ausgebildete Reflektorfläche ausgekleidet werden. Durch das Reflektorelement lassen sich die Optik sowie die reflektive Eigenschaft der Reflektorfläche verändern. Vorzugsweise wird das Reflektorelement über mindestens ein Verankerungselement, wie zum Beispiel eine Schraube oder einen Stift, mit der Befestigungsvorrichtung verbunden. Alternativ kann das Reflektorelement jedoch auch mit der Reflektorfläche verbunden werden, beispielsweise durch Kleben und/oder in der Reflektorfläche ausgebildete Verrastelemente.

Nach einer weiteren vorteilhaften Ausführungsform handelt es sich beim Einsatzelement um ein Leuchtmittel oder eine Leuchte. Dieses kann beispielsweise in Form einer gewölbten Scheibe ausgebildet sein. Beispielsweise kann es sich um eine gewölbte Scheibe mit einem oder mehreren darin integrierten Licht-emittierenden Elementen, wie beispielsweise Leuchtdioden, handeln.

Gemäss einer weiteren nicht erfindungsgemäßen Ausführungsform umfasst das Einsatzelement ein Abdeckelement, welche im Besonderen zur teilweisen oder vollständigen Abdeckung des funktionalen Bereichs ausgelegt ist. Dabei kann es sich beispielsweise um eine Sichtblende, einen Lufteinlass, einen Luftauslass, eine Lüftungsabdeckung, ein Lüftungsgitter, ein Lochgitter, ein Luftleitelement, ein Luftleitblech und/oder einen Strömungsrichter handeln.

Beispielsweise, aber nicht erfindungsgemäß, kann das Einsatzelement in Form einer Lüftungsabdeckung vorliegen, welche kleiner ist als die Schalungseinlage. Damit lässt sich die Lüftungsabdeckung so montieren, dass zwischen Lüftungsabdeckung und Funktionsfläche ein spaltförmiger Durchlass vorliegt. Dieser kann zur gezielten Zufuhr und/oder Abfuhr von Luft dienen. Eine Durchlassmenge kann beispielsweise durch eine Breite des spaltförmigen Durchlasses kontrolliert werden. Beispielsweise kann im Falle einer scheibenförmigen Lüftungsabdeckung und einer Schalungseinlage in Form einer gewölbten Scheibe der Durchmesser der scheibenförmigen Lüftungsabdeckung kleiner sein als der Durchmesser der gewölbten Scheibe.

Das Einsatzelement kann unabhängig von dessen konkreter Ausgestaltung insbesondere am Einbaukörper befestigt werden. Auch möglich ist es aber das Einsatzelement zusätzlich oder anstatt des Einbaukörpers am funktionalen Bereich zu befestigen. Die Befestigung am Einbaukörper oder am funktionalen Bereich kann durch kraft-, form- und/oder stoffschlüssige Verbindungen erfolgen, beispielsweise durch eine Ratsverbindung, eine Schnappverbindung, durch Verschrauben und/oder durch Verkleben.

Auch möglich ist es, dass dem Gerätesatz eine Beschichtungszusammensetzung beiliegt, welche nach der Erzeugung des funktionalen Bereichs auf diesen aufgetragen werden kann, beispielsweise um dessen Eigenschaften und/oder Funktionen zu verändern. Denkbar ist z.B. dass eine Beschichtungszusammensetzung Strom-leitende Elemente, Licht-emittierenden Elemente, Farbe und/oder Licht-reflektierende Elemente enthält.

Als fliessbarer und aushärtbarer Baustoff wird vorzugsweise eine hydraulisch abbindende Zusammensetzung eingesetzt. Insbesondere wird als Baustoff eine zementöse Zusammensetzung, im Speziellen eine Mörtel- oder Betonzusammensetzung eingesetzt.

Derartige Baustoffe eignen sich insbesondere zur Herstellung von Bauteilen, die Bestandteile eines Bauwerks oder Gebäudes sind oder in ein Bauwerk oder Gebäude eingebaut werden.

Durch diverse Additive lassen sich zudem die Fliesseigenschaften sowie die Abbindezeit solcher Zusammensetzungen gezielt beeinflussen, wobei diese Eigenschaften zum Beispiel zur Ausbildung eines funktionalen Bereichs, insbesondere einer Reflektorfläche, optimiert werden können.

Der erfindungsgemässe Gerätesatz wird zur Ausbildung eines funktionalen Bereichs für eine Infrastrukturfunktion, im Speziellen eine Gebäudeinfrastrukturfunktion, in einem Bauteil aus einem giessbaren und aushärtbaren Baustoff verwendet. Dabei wird der Gerätesatz für die Ausbildung einer Reflektorfläche einer Leuchte, eines Luftdurchlasses, einer Öffnung für eine Sanitärinstallation, einen Auslass eines Heizsystems und/oder eines Kühlsystems, in einem Bauteil aus einem giessbaren und aushärtbaren Baustoff verwendet.

Besonders bevorzugt wird der erfindungsgemässe Gerätesatz zur Ausbildung einer Reflektorfläche für eine Leuchte und/oder eines Lüftungsdurchlasses in einem Bauteil aus einem giessbaren und aushärtbaren Baustoff verwendet. Besonders geeignet ist der Gerätesatz bei der Verwendung zur Ausbildung einer Reflektorfläche für eine Leuchte.

Aus der nachfolgenden Detailbeschreibung und der Gesamtheit der Patentansprüche ergeben sich weitere vorteilhafte Ausführungsformen und Merkmalskombinationen der Erfindung, solange diese unter den Schutzumfang der Erfindung fallen, welche allein durch die beigefügten Ansprüche definiert wird.

### Kurze Beschreibung der Zeichnungen

Die zur Erläuterung des Ausführungsbeispiels verwendeten Zeichnungen zeigen:
- Fig. 1: schematisch eine Explosionszeichnung einer Ausführungsform eines erfindungsgemässen Gerätesatzes ohne die Darstellung des Einsatzelementes;
- Fig. 2: zeigt den Gerätesatz aus der Fig. 1 in einem zusammengesetzten Zustand;
- Figs. 3a, 3b: schematisch ein Schnittbild eines Teils eines unter Hilfe des erfindungsgemässen Gerätesatzes gegossenen Bauteils mit einer Reflektorfläche;
- Fig. 4: schematisch ein Schnittbild eines Teils eines mit Hilfe eines erfindungsgemässen Gerätesatzes gegossenen Bauteils mit einem Lüftungsauslass.

Grundsätzlich sind in den Figuren gleiche Teile mit gleichen Bezugszeichen versehen.

### Wege zur Ausführung der Erfindung

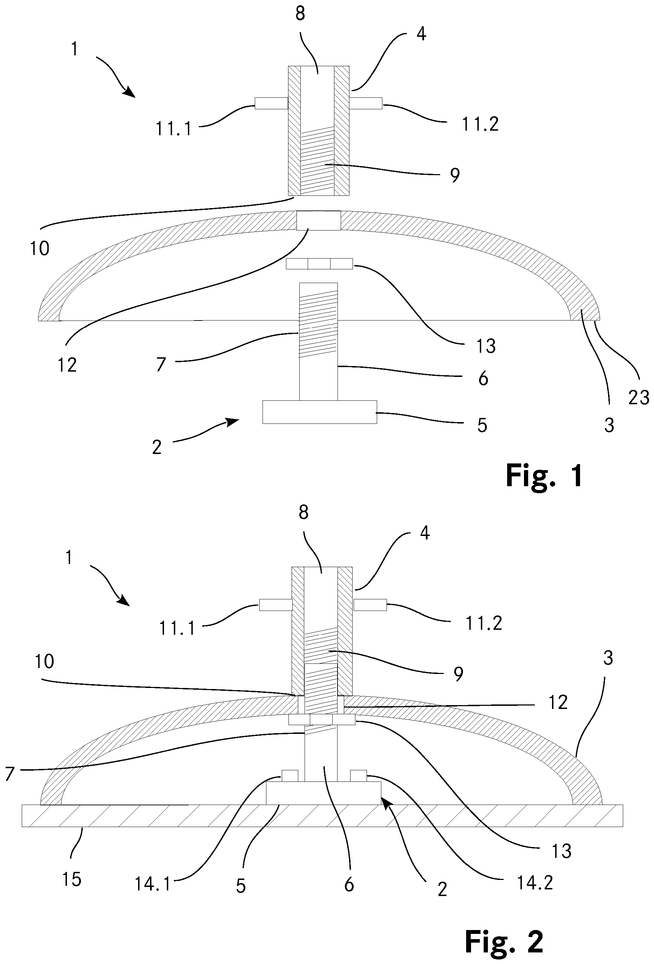

Die Fig. 1 zeigt schematisch eine Explosionszeichnung einer Ausführungsform eines erfindungsgemässen Gerätesatzes 1, wobei hier das Einsatzelement nicht dargestellt ist. Der Gerätesatz 1 umfasst eine Montagehilfe 2, welche eine Basis 5 und einen von der Basis 5 abstehenden Stutzen 6 aufweist. Der Stutzen 6 ist mit einem Aussengewinde 7 ausgestattet.

Ferner verfügt der Gerätesatz 1 über eine Schalungseinlage 3, z.B. aus Stahl, welche erfindungsgemäß als gewölbte Scheibe vorliegt. Im Bereich eines Scheitelpunktes verfügt die Schalungseinlage 3 über eine Öffnung 12. Die Öffnung 12 hat einen Durchmesser der grösser ist als der Durchmesser des Stutzens 6 der Montagehilfe 5, so dass dieser durch diese Öffnung 12 geschoben werden kann.

Der Gerätesatz umfasst weiter einen Einbaukörper in Form einer Befestigungsvorrichtung 4, welche bei der gezeigten Ausführungsform als beidseitig offene Hülse ausgestaltet ist. Die Befestigungsvorrichtung 4 weist dementsprechend eine Bohrung 8 entlang ihrer Längsachse auf. Innerhalb der Bohrung 8 ist im Bereich eines ersten Endes der Befestigungsvorrichtung 4 ein Innengewinde 9 angeordnet. Das erste Ende der Befestigungsvorrichtung 4 bildet zugleich eine Anschlagsfläche 10, deren Funktion im Zusammenhang mit der Fig. 2 weiter erläutert wird. Ferner sind an einer Aussenwandung der als Hülse ausgestalteten Befestigungsvorrichtung 4 zwei Verankerungselemente 11.1, 11.2 angebracht, welche in der gezeigten Ausführungsform als stangenförmige Vorsätze ausgestaltet sind.

Das Innengewinde 9 der Befestigungsvorrichtung 4 ist komplementär mit dem Aussengewinde 7 des Stutzens 6 der Montagehilfe 2 ausgestaltet. Das heisst, dass das Aussengewinde 7 und das Innengewinde 9 miteinander verschraubt werden können. Einerseits erlaubt dies eine lösbare Verbindung zwischen der Montagehilfe 2 und der Befestigungsvorrichtung 4, andererseits bilden Aussengewinde 7 und Innengewinde 9 eine Anpressvorrichtung, um die Schalungseinlage 3 gegen eine Schalung oder Gussform anzudrücken, wie dies in der Fig. 2 dargestellt wird.

Die Fig. 2 zeigt den Gerätesatz aus der Fig. 1 in einem zusammengesetzten Zustand. Die Montagehilfe 2 ist auf einer Schalung 15 lösbar befestigt. Hierzu werden Befestigungsmittel 14.1, 14.2, beispielsweise Schrauben, durch entsprechende Löcher in der Basis 5 der Montagehilfe 2 durchgeführt und in der Schalung 15 befestigt. Der Stutzen 6 der Montagehilfe 2 ist durch die Öffnung 12 der Schalungshilfe 3 durchgeführt. Mittels Verschrauben des Aussengewindes 7 mit dem Innengewinde 9 wird die Montagehilfe 2 lösbar mit der Befestigungsvorrichtung 4 verbunden. Gleichzeitig dient diese Schraubverbindung zwischen dem Innengewinde 7 und dem Aussengewinde 9 als Anpressvorrichtung, wobei die Befestigungsvorrichtung 4 durch das Schrauben relativ zur Montagehilfe 2 linear verschoben wird. Über die Anschlagsfläche 10 am ersten Ende der Befestigungsvorrichtung 4, welche mit der Schalungseinlage 3 im Bereich ihrer Öffnung 12 in Berührung kommt, wird eine Kraft auf die Schalungseinlage 3 ausgeübt. Durch diese Krafteinwirkung wird die Schalungseinlage 3 mit einer äusseren Kante 23 auf die Schalung 15 angedrückt. Durch dieses Andrücken kann zwischen der äusseren Kante 23 und der Schalung 15, beziehungsweise deren Schalhaut eine Dichtwirkung erzielt werden, so dass bei einem anschliessenden Giessen eines giessbaren und aushärtbaren Baustoffs dieser nicht in den Raum zwischen Schalungseinlage 3 und Schalung 15 eindringen kann.

Durch das Aufschrauben der Mutter 13 wird ein Anschlag gebildet, der die Bewegung der Befestigungsvorrichtung 4 relativ zur Montagehilfe 2 beschränkt. Dadurch kann verhindert werden, dass durch übermässiges Schrauben eine ungewollte Verformung der als gewölbte Scheibe ausgeführten Schalungshilfe 3 stattfindet.

Beim Anschliessenden Giessen des fliessbaren und aushärtbaren Baustoffs wird die Befestigungsvorrichtung von diesem umflossen.

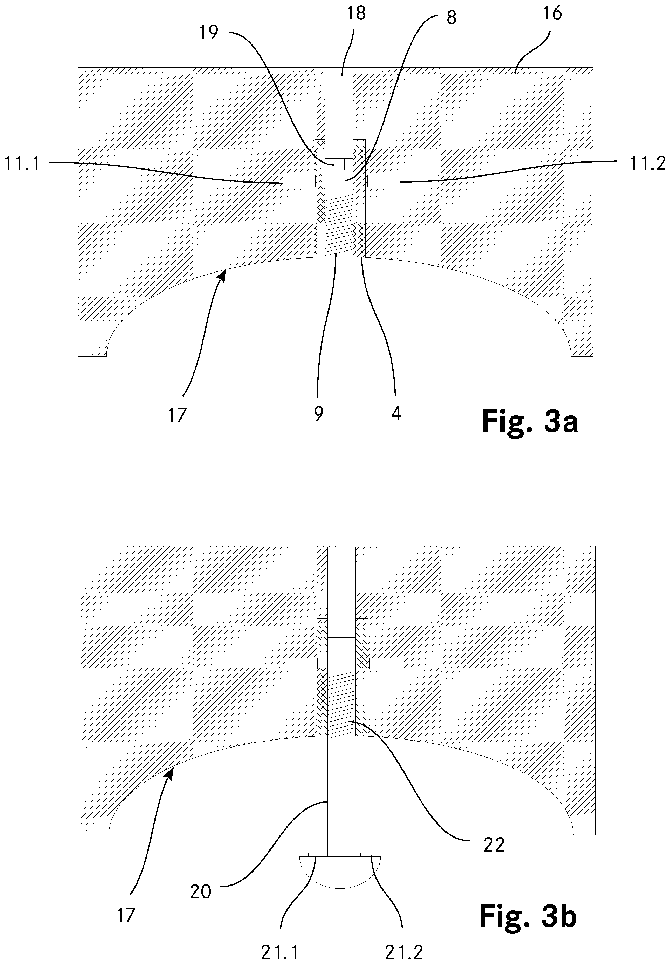

Die Fig. 3a zeigt schematisch ein Schnittbild eines Teils eines unter Hilfe des erfindungsgemässen Gerätesatzes 1 gegossenen Bauteils 16, beispielsweise aus Beton. Nach dem Giessen und Aushärten des Baustoffs werden die Schalung 15, die Montagehilfe 2 inklusive der aufgeschraubten Mutter 13 sowie die Schalungseinlage 3 entfernt. Die in den Baustoff eingegossene Befestigungsvorrichtung 4 dient im fertigen Bauteil 16 zur Befestigung eines Leuchtmittels oder einer Leuchtmittelfassung, insbesondere über das Innengewinde 9, wie dies in der Fig. 3b dargestellt ist. Durch die Anordnung der Schalungseinlage 3 auf der Schalung 15 entsteht beim Bauteil ein funktionaler Bereich in Form einer Reflektorfläche 17, welche eine zur Aussenseite der Schalungseinlage 3 komplementäre Form aufweist. Die Verankerungselemente 11.1, 11.2 sind im Bauteil von diesem umschlossen. Dadurch wird einerseits eine verdrehsichere Verankerung der Befestigungsvorrichtung 4 im Bauteil 16 ermöglicht, andererseits wird auch verhindert, dass die Befestigungsvorrichtung 4 aus dem Bauteil 16 herausgerissen werden kann.

Vor dem Giessen des fliessbaren und aushärtbaren Baustoffs wird ein Montagerohr 18 derart angeordnet, dass ein Ende des Montagerohrs 18 in die Bohrung 8 der als Hülse ausgestalteten Befestigungsvorrichtung 4 ragt. Durch das Montagerohr 18 kann nach dem Aushärten des Bauteils 16 ein elektrisches I<abel 19 eingezogen werden.

Die Fig. 3b zeigt den Abschnitt des Bauteils 16 der Fig. 3a mit angebrachter Leuchtmittelfassung 20. Die Leuchtmittelfassung 20 wird über ein Gewinde 22 mit dem Innengewinde 9 der Befestigungsvorrichtung 4 verschraubt. Über das elektrische I<abel 19 wird die Leuchtmittelfassung 20 mit Strom versorgt. Leuchtmittel 21.1, 21.2 sind mit der Leuchtmittelfassung 20 verbunden, wobei diese derart angeordnet sind, dass sie die Reflektorfläche 17 anstrahlen.

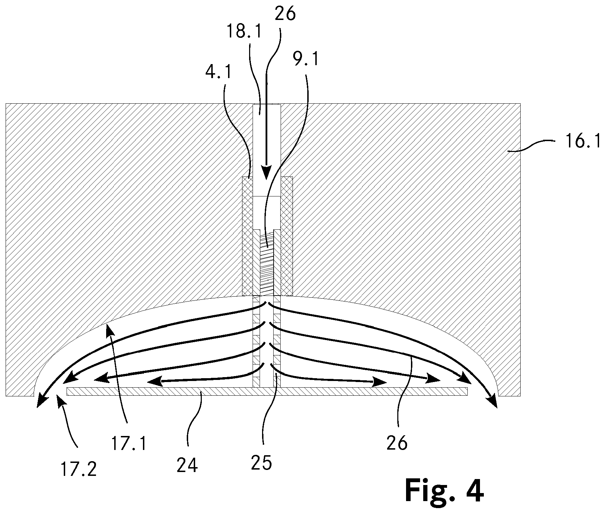

Fig. 4 zeigt schematisch ein Schnittbild eines weiteren gegossenen Bauteils 16.1, welches z.B. ebenfalls aus Beton besteht und Bestandteil einer Decke ist. Das weitere Bauteil 16.1 wurde analog zum Bauteil 16 hergestellt, wobei aber anstelle der Befestigungsvorrichtung 4, ein Einbaukörper in Form eines beidseitig offenen Luftauslassrohrs 4.1 verwendet wurde. Vor dem Giessen des fliessbaren und aushärtbaren Baustoffs wurde dabei ein Belüftungsrohr 18.1 eines Luftleitungsnetzes derart angeordnet, dass ein Ende des Belüftungsrohrs 18.1 in die Bohrung des Luftauslassrohrs 4.1 ragt. Das Luftauslassrohr 4.1 weist im Bereich, welcher dem Belüftungsrohr 18.1 abgewandt ist, ein Innengwinde 9.1 auf, mit welchem es vorgängig auch an einer Montagehilfe analog der Montagehilfe aus Fig. 1 angebracht war.

Die im Bauteil 16.1 aufgrund der Schalungseinlage 3 gebildete gewölbte Fläche bildet einen funktionalen Bereich in Form eines Luftauslassbereichs 17.1.

Im Luftauslassrohr 4.1 ist ein mit einem Aussengewinde versehenes Ende eines Verbindungsrohrs 25 eingeschraubt. Am entgegengesetzten Ende ist am Verbindungsrohr 25 eine kreisscheibenförmige Lüftungsabdeckung 24 angebracht. Das Verbindungsrohr weist im Mantelbereich mehrere Öffnungen auf, durch welche Luft aus dem Innern des Verbindungsrohrs 25 nach aussen in den Bereich zwischen Lüftungsabdeckung 24 und Luftauslassbereich 17.1 gelangen kann.

Ein Durchmesser der Lüftungsabdeckung 24 ist dabei kleiner als ein Durchmesser des Luftauslassbereichs 17.1, so dass aufgrund der konzentrischen Anordnung der beiden Teile ein ringförmiger Spalt 17.2 vorliegt.

Luft 26 kann damit im Betrieb aus dem Luftleitungsnetz über das Belüftungsrohr 18.1, das Luftauslassrohr 4.1, und das Verbindungsrohr 25 in den Bereich zwischen Lüftungsabdeckung 24 und Luftauslassbereich 17.1 gelangen von wo die Luft 26 über den Spalt 17.2 in einen Raum eine Gebäudes ausgelassen werden kann.

Die vorstehend gezeigten Ausführungsformen stellen jedoch lediglich illustrative Beispiele dar, welche im Rahmen der Erfindung beliebig abgewandelt werden können, solange sie nicht den Schutzumfang der Erfindung verlassen, die allein durch die beigefügten Ansprüche definiert wird.

So ist es beispielsweise möglich, anstelle der kreisrunden Schalungseinlage 3 eine anders geformte Schalungseinlage vorzusehen, welche nicht kreisrund ist oder eine nichtrunde Form hat. Auch kann die Wölbung der Schalungseinlage 3 je nach funktionalem Bereich, welcher erzeugt werden soll, anders gewählt werden. Dabei kann die Schalungseinlage an der äusseren Oberfläche auch strukturiert sein, so dass gezielt Strukturen im funktionalen Bereich eingegossen werden können.

Es ist auch möglich, dass die Schalungseinlage 3 beispielsweise aus einem Kunststoff gefertigt wird und/oder zusätzlich Verstärkungselemente wie beispielsweise Stützrippen aufweist.

Auf eine Mutter 13 kann prinzipiell auch verzichtet werden. Bei Bedarf kann zusätzlich oder anstelle der Mutter 13 z.B. ein fixer Anschlag am Stutzen 6 oder an der Basis 5 angebracht werden, so dass eine allenfalls erwünschte Abstützung der Schalungseinlage 3 über den fixen Anschlag erfolgt.

Im Ergebnis ermöglicht es die vorliegende Erfindung, in einfacher und zuverlässiger Art und Weise funktionale Bereiche in Bauteilen aus giessbaren und aushärtbaren Baustoffen herzustellen.

## Patentansprüche

1. Gerätesatz (1) zur Ausbildung eines funktionalen Bereichs (17) in Form einer Reflektorfläche einer Leuchte, eines Luftdurchlasses, einer Öffnung für eine Sanitärinstallation, eines Auslasses eines Heizsystems und/oder eines Kühlsystems, in einem Bauteil (16) aus einem giessbaren und aushärtbaren Baustoff, insbesondere in einer Betondecke und/oder einer Betonwand, umfassend:
a) eine Montagehilfe (2), welche auf einer Gussform oder einer Schalung (15) für den giessbaren und aushärtbaren Baustoff lösbar befestigbar ist;
b) eine Schalungseinlage (3), welche an einer Aussenseite, die dem giessbaren und aushärtbaren Baustoff zugewandt ist, eine im Wesentlichen zur Form des zu erzeugenden funktionalen Bereichs (17) komplementäre Form aufweist;
c) einen Einbaukörper (4), welcher lösbar an der Montagehilfe angebracht werden kann und zum Einbau im Bauteil aus dem giessbaren und aushärtbaren Baustoff vorgesehen ist;
d) eine Anpressvorrichtung (7, 9), welche ein Andrücken der Schalungseinlage gegen die Gussform oder die Schalung (15) ermöglicht, wenn die Schalungseinlage (3) auf der Gussform oder Schalung (15) aufgelegt ist;
wobei der Einbaukörper (4) ein beidseitig offenes Rohrstück oder eine beidseitig offene Hülse umfasst,
wobei der Gerätesatz weiter ein Einsatzelement umfasst, welches wenigstens bereichsweise, insbesondere im Wesentlichen vollständig, eine zur Schalungseinlage (3) und/oder zum zu erzeugenden funktionalen Bereich (17) komplementäre Form hat und wobei das Einsatzelement (3) bevorzugt so ausgebildet ist, dass es mit dem Einbaukörper (4) verbunden werden kann, **dadurch gekennzeichnet, dass** die Schalungseinlage (3) als gewölbte Scheibe ausgeführt ist, deren Aussenseite konvex gewölbt ist, und dass das Einsatzelement im Wesentlichen denselben Aussendurchmesser, dieselbe Form und/oder dieselbe Grösse wie die Schalungseinlage (3) aufweist und das Einsatzelement die Form einer gewölbten Scheibe hat, und wobei das Einsatzelement ein Reflektorelement aus einem Metall, Holz und/oder einem polymeren Werkstoff ist.

2. Gerätesatz nach Anspruch 1, **dadurch gekennzeichnet, dass** die Anpressvorrichtung (7, 9) derart ausgebildet ist, dass diese eine Relativbewegung zwischen Einbaukörper (4) und Montagehilfe (2) ermöglicht, wobei eine Anschlagsfläche des Einbaukörpers (4) auf die Schalungseinlage (3) einwirkt, so dass diese gegen die Gussform oder Schalung (15) angedrückt werden kann, wenn die Schalungseinlage (3) auf der Gussform oder der Schalung (15) aufgelegt ist.

3. Gerätesatz nach Anspruch 1 oder 2, **dadurch gekennzeichnet, dass** die Anpressvorrichtung (7, 9) mindestens eine Schraubverbindung beinhaltet oder ist, mit welcher der Einbaukörper (4) lösbar an der Montagehilfe (2) befestigbar und relativ zu dieser linear bewegbar ist.

4. Gerätesatz nach einem der Ansprüche 1 bis 3, **dadurch gekennzeichnet, dass** die Montagehilfe (2) über eine Basis (5), mit welcher die Montagehilfe (2) lösbar mit der Gussform oder Schalung (15) befestigt werden kann, sowie über einen von der Basis (5) abstehenden Stutzen (6) verfügt, mit welchem die Montagehilfe (2) lösbar mit dem Einbaukörper (4) befestigt werden kann, wobei der Stutzen (6) vorzugsweise über ein Aussengewinde (7) verfügt.

5. Gerätesatz nach Anspruch 4, **dadurch gekennzeichnet, dass** die Schalungseinlage (3) über eine Öffnung (12) verfügt, durch welche der Stutzen (6) der Montagehilfe (2) durchführbar ist, wobei der Stutzen (6) vorzugsweise über einen Anschlag (13) verfügt, mit welchem ein Abstand eines nicht auf der Gussform oder der Schalung (15) stehenden Bereichs der Schalungseinlage relativ zur Gussform oder Schalung (15) begrenzt werden kann.

6. Gerätesatz nach einem der Ansprüche 1 bis 5, **dadurch gekennzeichnet, dass** der Einbaukörper (4) über mindestens ein Verankerungselement (11.1, 11.2) verfügt, mit welcher der Einbaukörper (4) im giessbaren und aushärtbaren Baustoff verankert werden kann.

7. Gerätesatz nach einem der Ansprüche 1 bis 6, **dadurch gekennzeichnet, dass** das Einsatzelement eine Leuchte und/oder ein Leuchtmittel ist.

8. Verfahren zur Ausbildung eines funktionalen Bereichs (17) in Form einer Reflektorfläche einer Leuchte, eines Luftdurchlasses, einer Öffnung für eine Sanitärinstallation, eines Auslasses eines Heizsystems und/oder eines I<ühlsystems, in einem Bauteil (16) aus einem giessbaren und aushärtbaren Baustoff mit einem Gerätesatz (1) nach einem der Ansprüche 1 - 7, umfassend die Schritte:
a) Befestigen der Montagehilfe (2) in einer Gussform oder an einer Schalung (15) für den giessbaren und aushärtbaren Baustoff;
b) Auflegen der Schalungseinlage (3), welche an einer Aussenseite, die dem giessbaren und aushärtbaren Baustoff zugewandt wird, eine im Wesentlichen zur Form des zu erzeugenden funktionalen Bereichs (17) komplementäre Form aufweist, in die Gussform oder Schalung (15);
c) Anbringen des Einbaukörpers (4) an der Montagehilfe (2), insbesondere so dass der Einbaukörper (4) an der Aussenseite der Schalungseinlage (3) anliegt;
d) Andrücken der Schalungseinlage (3) gegen die Gussform oder Schalung (15) mittels der Anpressvorrichtung (7, 9);
e) Giessen des Bauteils, wobei der Einbaukörper (4) zumindest teilweise, vorzugsweise jedoch vollständig eingegossen wird;
f) Aushärten des Baustoffs und Entfernen mindestens der Montagehilfe (2) und der Schalungseinlage (3) vom Bauteil.

9. Verfahren nach Anspruch 8, **dadurch gekennzeichnet, dass** anschliessend das Einsatzelement in den funktionalen Bereich (17) eingelegt wird.

10. Verfahren nach einem der Ansprüche 8 bis 9, **dadurch gekennzeichnet, dass** der giessbare und aushärtbare Baustoff eine hydraulisch abbindende Zusammensetzung umfasst, insbesondere eine zementöse Zusammensetzung, im Speziellen eine Mörtel-oder Betonzusammensetzung.

11. Verwendung eines Gerätesatzes (1) nach einem der Ansprüche 1 - 7 zur Ausbildung eines funktionalen Bereichs (17) in Form einer Reflektorfläche einer Leuchte, eines Luftdurchlasses, einer Öffnung für eine Sanitärinstallation, eines Auslasses eines Heizsystems und/oder eines I<ühlsystems, in einem Bauteil (16) aus einem giessbaren und aushärtbaren Baustoff.

## Claims

1. A set (1) for forming a functional area (17) in the form of a reflector surface of a luminaire, an air passage, an opening for a sanitary installation, an outlet of a heating system and/or of a cooling system, in a component (16) made of a castable and curable building material, in particular in a concrete ceiling and/or a concrete wall, comprising:
a) a mounting aid (2) which can be loosely attached to a mould or a formwork (15) for the castable and curable building material;
b) a formwork insert (3) which, on an outer side facing the castable and curable building material, has a shape substantially complementary to the shape of the functional area (17) to be produced;
c) a mounting body (4), which can be loosely attached to the mounting aid (2) and is intended for installation in the component (16) made of the castable and curable building material;
d) a pressing device (7, 9) which enables the formwork insert (3) to be pressed against the mould or the formwork (15) when the formwork insert (3) is placed on the mould or formwork (15);
wherein the mounting body (4) comprises a pipe section open on both sides or a sleeve open on both sides,
wherein the set further comprises an insert element which, at least in certain areas, in particular substantially completely, has a shape complementary to the formwork insert (3) and/or to the functional area (17) to be produced, and the insert element preferably being designed in such a way that it can be connected to the mounting body (4),
**characterized in that** the formwork insert (3) is designed as a curved disc, the outside of which is convexly curved, and **in that** the insert element has essentially the same outer diameter, the same outer diameter, the same shape and/or the same size as the formwork insert (3) and the insert element has the shape of a curved disc, and wherein the insert element is a reflector element made of a metal, wood and/or a polymeric material.

2. Set according to claim 1, **characterised in that** the pressing device (7, 9) is designed in such a way that it enables a relative movement between the mounting body (4) and the mounting aid (2), a stop surface of the mounting body (4) acting on the formwork insert (3) so that the latter can be pressed against the mould or formwork (15) when the formwork insert (3) is placed on the mould or the formwork (15).

3. Set according to claim 1 or 2, **characterised in that** the pressing device (7, 9) includes or is at least one screw connection by means of which the mounting body (4) can be detachably fastened to the mounting aid (2) and can be moved linearly relative to the latter.

4. Set according to one of the claims 1 to 3, **characterised in that** the mounting aid (2) has a base (5) with which the mounting aid (2) can be detachably fastened to the casting mould or formwork (15), as well as a connection piece (6) projecting from the base (5) with which the mounting aid (2) can be detachably fastened to the mounting body (4), the connection piece (6) preferably having an external thread (7).

5. Set according to claim 4, **characterised in that** the formwork insert (3) has an opening (12) through which the connection piece (6) of the mounting aid (2) can be passed, the connection piece (6) preferably having a stop (13) with which a distance of a region of the mounting insert not standing on the mould or the formwork (15) relative to the mould or formwork (15) can be limited.

6. Set according to one of the claims 1 to 5, **characterised in that** the mounting body (4) has at least one anchoring element (11.1, 11.2) with which the mounting body (4) can be anchored in the castable and curable building material.

7. Set according to one of claims 1 to 6, **characterised in that** the insert element is a luminaire and/or a light source.

8. A method of forming a functional area (17) in the form of a reflector surface of a luminaire, an air passage, an opening for a sanitary installation, an outlet of a heating system and/or a cooling system, in a component (16) of a castable and curable building material with a set (1) according to one of the claims 1 - 7, comprising the steps:
a) fastening the mounting aid (2) in a mould or to a formwork (15) for the castable and curable building material;
b) placing the mounting insert (3), which on an outer side facing the castable and curable building material has a shape substantially complementary to the shape of the functional area (17) to be created into the mould or formwork (15);
c) attachment of the mounting body (4) to the mounting aid (2), in particular so that the mounting body (4) lies against the outside of the formwork insert (3);
d) pressing the formwork insert (3) against the mould or formwork (15) by means of the pressing device (7, 9);
e) casting of the component, whereby the mounting body (4) is cast in at least partially, but preferably completely;
f) curing of the building material and removal of at least the mounting aid (2) and the formwork insert (3) from the building component.

9. Method according to claim 8, **characterised in that** the insert element is subsequently inserted into the functional area (17).

10. A method according to any one of claims 8 to 9, **characterised in that** the castable and curable building material comprises a hydraulically setting composition, in particular a cementitious composition, more particularly a mortar or concrete composition.

11. Use of a set (1) according to any one of claims 1 - 7 for forming a functional area (17) in the form of a reflector surface of a luminaire, an air passage, an opening for a sanitary installation, an outlet of a heating system and/or a cooling system, in a component (16) made of a castable and curable building material.

## Revendications

1. Appareillage (1) pour la formation d'une zone fonctionnelle (17) prenant la forme d'une surface réfléchissante d'une lampe, d'un siphon d'air, d'une ouverture pour une installation sanitaire, d'une sortie d'un système de chauffage et/ou d'un système de refroidissement, dans un composant (16) réalisé à partir d'un matériau de construction coulable et durcissable, notamment dans un plafond en béton et/ou une paroi en béton, comprenant :
a) un auxiliaire de montage (2) qui peut être fixé de façon amovible sur un moule ou un coffrage (15) pour le matériau de construction coulable et durcissable ;
b) un insert de coffrage (3) qui est orienté, au niveau d'un côté extérieur, vers le matériau de construction coulable et durcissable, une forme pour l'essentiel complémentaire à la forme de la zone fonctionnelle (17) à réaliser ;
c) un corps encastrable (4) qui peut être disposé de façon amovible au niveau de l'auxiliaire de montage et est prévu pour un encastrement dans le composant réalisé à partir du matériau de construction coulable et durcissable ;
d) un dispositif de compression (7, 9) qui permet une compression de l'insert de coffrage contre le moule ou le coffrage (15) lorsque l'insert de coffrage (3) est placé sur le moule ou le coffrage (15) ;
dans lequel le corps encastrable (4) comprend une pièce tubulaire ouverte des deux côtés ou une douille ouverte des deux côtés ;
dans lequel l'appareillage comprend en sus un élément insérable qui a au moins en partie, notamment pour l'essentiel totalement, une forme complémentaire à l'insert de coffrage (3) et/ou à la zone fonctionnelle (17) à réaliser et dans lequel l'élément insérable (3) est réalisé de façon préférée de façon à pouvoir être relié au corps encastrable (4) ;
**caractérisé en ce que** l'insert de coffrage (3) est réalisé sous la forme d'un disque bombé dont le côté extérieur est bombé de façon convexe et que l'élément insérable comporte pour l'essentiel le même diamètre extérieur, la même forme et/ou la même taille que l'insert de coffrage (3) et que l'élément insérable a la forme d'un disque bombé et dans lequel l'élément insérable est un élément réfléchissant réalisé à partir d'un matériau métallique, en bois et/ou en polymère.

2. Appareillage selon la revendication 1, **caractérisé en ce que** le dispositif de compression (7, 9) est réalisé de telle sorte que celui-ci permette un mouvement relatif entre le corps encastrable (4) et l'auxiliaire de montage (2), dans lequel une surface de butée du corps encastrable (4) agit sur l'insert de coffrage (3), de façon à pouvoir comprimer le moule ou le coffrage (15) lorsque l'insert de coffrage (3) est placé sur le moule ou le coffrage (15).

3. Appareillage selon la revendication 1 ou 2, **caractérisé en ce que** le dispositif de compression (7, 9) contient ou prend la forme d'au moins une liaison à l'aide de laquelle le corps encastrable (4) peut être fixé de façon amovible au niveau de l'auxiliaire de montage (2) et être déplacé de façon linéaire par rapport à lui.

4. Appareillage selon l'une quelconque des revendications 1 à 3, **caractérisé en ce que** l'auxiliaire de montage (2) peut être fixé de façon amovible au moule ou au coffrage (15) par le biais d'une base (5) et dispose d'un manchon (6) saillant par rapport à la base (5) à l'aide duquel l'auxiliaire de montage (2) peut être fixé de façon amovible au corps encastrable (4), le manchon (6) disposant de préférence d'un filet extérieur (7).

5. Appareillage selon la revendication 4, **caractérisé en ce que** l'insert de coffrage (3) dispose d'une ouverture (12) à travers laquelle le manchon (6) de l'auxiliaire de montage (2) peut être introduit, dans lequel le manchon (6) dispose de préférence d'une butée (13) à l'aide de laquelle un écartement d'une zone, non située sur le moule ou le coffrage (15), de l'insert de coffrage peut être délimitée par rapport au moule ou au coffrage (15).

6. Appareillage selon l'une quelconque des revendications 1 à 5, **caractérisé en ce que** le corps encastrable (4) dispose d'au moins un élément d'ancrage (11.1, 11.2) à l'aide duquel le corps encastrable (4) peut être ancré dans le matériau de construction coulable et durcissable.

7. Appareillage selon l'une quelconque des revendications 1 à 6, **caractérisé en ce que** l'élément insérable est une lampe et/ou un moyen d'éclairage.

8. Procédé pour la formation d'une zone fonctionnelle (17) prenant la forme d'une surface réfléchissante d'une lampe, d'un siphon d'air, d'une ouverture pour une installation sanitaire, d'une sortie d'un système de chauffage et/ou d'un système de refroidissement, dans un composant (16) réalisé à partir d'un matériau de construction coulable et durcissable à l'aide d'un appareillage (1) selon l'une quelconque des revendications 1 à 7, comprenant les étapes suivantes :
a) fixation de l'auxiliaire de montage (2) dans un moule ou au niveau d'un coffrage (15) pour le matériau de construction coulable et durcissable ;
b) mise en place de l'insert de coffrage (3) qui comporte au niveau d'un côté extérieur orienté vers le matériau de construction coulable et durcissable une forme pour l'essentiel complémentaire à la forme de la zone fonctionnelle (17) à réaliser, dans le moule ou le coffrage (15) ;
c) application du corps encastrable (4) au niveau de l'auxiliaire de montage (2), notamment de sorte que le corps encastrable (4) bute contre le côté extérieur de l'insert de coffrage (3) ;
d) compression de l'insert de coffrage (3) contre le moule ou le coffrage (15) à l'aide du dispositif de compression (7, 9) ;
e) coulage du composant, dans lequel le corps encastrable (4) est coulé au moins en partie, de préférence toutefois entièrement ;
f) durcissement du matériau de construction et retrait au moins de l'auxiliaire de montage (2) et de l'insert de coffrage (3) hors du composant.

9. Procédé selon la revendication 8, **caractérisé en ce que** l'élément insérable est ensuite inséré dans la zone fonctionnelle (17).

10. Procédé selon l'une quelconque des revendications 8 à 9, **caractérisé en ce que** le matériau de construction coulable et durcissable comprend une composition à prise hydraulique, notamment une composition cémenteuse, de façon spécifique une composition de mortier ou de béton.

11. Utilisation d'un appareillage (1) selon l'une quelconque des revendications 1 à 7 pour la formation d'une zone fonctionnelle (17) prenant la forme d'une surface réfléchissante d'une lampe, d'un siphon d'air, d'une ouverture pour une installation sanitaire, d'une sortie d'un système de chauffage et/ou d'un système de refroidissement, dans un composant (16) réalisé à partir d'un matériau de construction coulable et durcissable.
